# EUROPÄISCHE PATENTSCHRIFT

(11) **EP 0 977 670 B1**
(45) Veröffentlichungstag und Bekanntmachung des Hinweises auf die Patenterteilung: **10.11.2004**
(21) Anmeldenummer: 99907459.4
(22) Anmeldetag: 29.01.1999
(51) Int. Cl.: B41M 3/14, B42D 15/00, B42D 15/10, G07D 7/00, G06K 19/14, G09F 3/00

(54) **BEDRUCKTES WERTDOKUMENT MIT EINEM LUMINESZIERENDEN ECHTHEITSMERKMAL**
PRINTED VALUABLE DOCUMENT COMPRISING A LUMINESCENT AUTHENTICITY FEATURE
DOCUMENT DE VALEUR IMPRIME COMPORTANT UNE CARACTERISTIQUE D'AUTHENTICITE LUMINESCENTE

(30) Priorität: 02.02.1998 DE 19803997
(43) Veröffentlichungstag der Anmeldung: 09.02.2000
(73) Patentinhaber: Giesecke & Devrient GmbH, 81677 München (DE)
(72) Erfinder: KAULE, Wittich Dr., D-82275 Emmering (DE); SCHWENK, Gerhard Dr., D-82178 Puchheim (DE); STENZEL, Gerhard Dr., D-82110 Germering (DE)
(74) Vertreter: Klunker, Hans-Friedrich, Dr.
(86) Internationale Anmeldenummer: PCT/EP1999/000596
(87) Internationale Veröffentlichungsnummer: WO 1999/038703

(56) Entgegenhaltungen:
- WO-A-81/03507
- WO-A-81/03510
- DE-A- 2 745 301

## Beschreibung

Die Erfindung betrifft ein bedrucktes Wertdokument mit zumindest einem Echtheitsmerkmal in Form einer lumineszierenden Substanz auf der Basis von mit wenigstens einem Seltenerdmetall dotierten Wirtsgitter.

Die Absicherung von Wertdokumenten mittels lumineszierender Substanzen ist bereits seit langem bekannt. Auch die Verwendung von Seltenerdmetallen wurde in diesem Zusammenhang bereits diskutiert. Sie haben den Vorteil dass sie im infraroten Spektralbereich schmalbandige Emissionslinien aufweisen, die besonders charakteristisch sind und deshalb von Emissionen anderer Stoffe messtechnisch sicher unterscheidbar sind. Um den Fälschungsschutz noch zu erhöhen, können die Seltenderdrnetalle zusammen mit anderen Stoffen in Wirtsgitter eingebaut werden, so dass das Anregungs- und/oder Emissionsspektrum des Seltenerdmetalls in charakteristischer Weise beeinflusst wird. Durch Kombination mit geeigneten absorbierenden Stoffen kann beispielsweise ein Teil der Anregungs- und/oder Emissionsbereiche des Seltenerdmetalls unterdrückt werden. Die Beeinflussung kann jedoch auch in einer "Verformung", z.B. durch Dämpfung bestimmter Bereiche breitbandiger Spektren bestehen.

Ebenfalls aus Gründen des Fälschungsschutzes werden häufig Seltenerdmetalle mit Emissionslinien oberhalb von 1500 nm verwendet, da der Nachweis der Emission umso aufwendiger und schwieriger wird, je weiter die Emissionslinien im IR-Spektralbereich liegen. Die WO 81/03507 schlägt die Verwendung spezieller, besonders stark absorbierender Seltenerdmetall - Luminophore mit speziellen, im sichtbaren und nahen IR-Bereich absorbierenden Wirtsgittern vor, wobei die Luminophore nur im Wellenlängenbereich zwischen 1,1 µm und 8 µm deutliche Emissionsbanden besitzen, gemäß den dort beschriebenen Ausführungsbeispielen zwischen 1,5 µm und 2,7 µm. Ganz allgemein gilt, dass die Detektivität von Fotodetektoren abnimmt, je langwelliger die zu messende Strahlung ist, da das Signal/Rauschverhältnis im selben Verhältnis geringer wird, d.h. die zu detektierenden Signale im Rauschen immer schwerer zu erkennen sind. Die Lumineszenzstoffe müssen daher auch mit einer gewissen Mindestkonzentration in dem Wertdokument vorhanden sein, um eine ausreichende Signalstärke erzeugen zu können, die sich zuverlässig im Rauschen nachweisen lässt. Diese für den Nachweis notwendigen Grenzkonzentrationen können jedoch in bestimmten Fällen nicht realisiert werden. Beispielsweise wenn die Lumineszenzstoffe eine Eigenfarbe aufweisen, die bei Zumischung zu dem Wertdokumentmaterial den gewünschten Farbeindruck zerstören. In manchen Fällen versucht man zudem, das Risiko der Entdeckung durch chemische Analyse der in einem Wertdokument enthaltenden Lumineszenzstoffe dadurch zu verringern, dass die Lumineszenzstoffe nur in sehr geringen Konzentrationen eingebracht werden.

In solchen Fällen muss auf Lumineszenzstoffe ausgewichen werden, deren Emissionslinien auch bei geringen Konzentrationen noch gut nachgewiesen werden können.

Der Erfindung liegt daher die Aufgabe zugrunde, ein Wertdokument mit einer lumineszierenden Substanz zur Verfügung zu stellen, die eine Emission im nahen IR-Spektralbereich aufweist, so dass sie auch bei geringen Konzentrationen der lumineszierenden Substanz im Wertdokument nachweisbar ist.

Die Lösung dieser Aufgabe ergibt sich aus den unabhängigen Ansprüchen. Weiterbildungen sind Gegenstand der Unteransprüche.

Das erfindungsgemäße Wertdokument enthält zumindest eine lumineszierende Substanz auf der Basis von mit Seltenerdmetall dotierten Wirtsgittern, wobei das Seltenerdmetall im nahen IR-Spektralbereich, d.h. im Wellenlängenbereich zwischen 0,8 µm und 1,1 µm emittiert. Dieser Emissionsbereich besitzt den Vorteil, dass er gut mit einem Silizium (Si)-, Galliumarsenid (GaAs)-, Gallium-Indium-Arsenid (GaₓInₓ₋₁As)- oder Germanium (Ge)-Fotodetektor nachgewiesen werden kann, da diese in diesem Wellenlängenbereich eine relativ hohe Ansprechempfindlichkeit aufweisen. Als optisch aktive Seltenerdelemente kommen hier die Elemente Ytterbium, Neodym oder Praseodym oder Mischungen dieser Elemente mit einem oder mehreren anderen Seltenerdmetallen in Frage.

Diese Seltenerdmetalle werden in ein Wirtsgitter eingebettet, das im sichtbaren Spektralbereich effektive Anregungsbanden hat und diese Anregungsbanden auf die Seltenerdmetalle transferiert. Die effektiven Anregungsbanden können beispielsweise durch Chrom-Bausteine realisiert werden, die gemäß der Erfindung in eine Granat- oder Perovskitstruktur eingebracht werden.

Das Wirtsgitter weist dabei zumindest im nahen infraroten Spektralbereich ein optisches Fenster auf und absorbiert nahezu im gesamten sichtbaren Spektralbereich, so dass alle Linien im sichtbaren Spektralbereich der lumineszierenden Substanz unterdrückt werden. Der Anregungsbereich der lumineszierenden Substanzen deckt sich mit dem Strahlungsbereich von starken Lichtquellen, wie Halogenlampen, Blitzlampen oder dergleichen. Dadurch und aufgrund des effektiven Energieübertrags auf die Seltenerdmetalle innerhalb des Wirtsgitters können bei den erfindungsgemäßen Wertdokumenten sehr geringe Stoffmengen eingesetzt werden, ohne dass die maschinelle Nachweismöglichkeit eingeschränkt wird. Ein Nachweis mittels einer chemischen Analyse allerdings wird durch die geringe Konzentration außerordentlich erschwert.

Die absorbierenden Wirtsgitterbestandteile können teilweise durch das nichtabsorbierende Aluminium ersetzt werden. Über den Anteil an Aluminium lässt sich die Absorption und damit die Helligkeit der lumineszierenden Substanz steuern. Derartige Lumineszenzstoffe können daher auch als Zusatzstoff für hellere Druckfarben eingesetzt werden.

Weitere Ausführungsformen und Vorteile der Erfindung werden im Folgenden anhand der Figur und der Beispiele erläutert:
- Fig. 1: Anregungsspektrum eines erfindungsgemäßen chromhaltigen Gitters,
- Fig. 2: Spektrum einiger Lichtquellen,
- Fig. 3: Emissionsspektrum eines erfindungsgemäßen Yb-dotierten Lumineszenzstoffes,
- Fig. 4: Emissionsspektrum eines erfindungsgemäßen Pr-dotierten Lumineszenzstoffes,
- Fig. 5: Emissionspektrum eines erfindungsgmäßen Nd-dotierten Lumineszenzstoffes,
- Fig. 6: erfindungsgemäßes Sicherheitselement im Querschnitt.

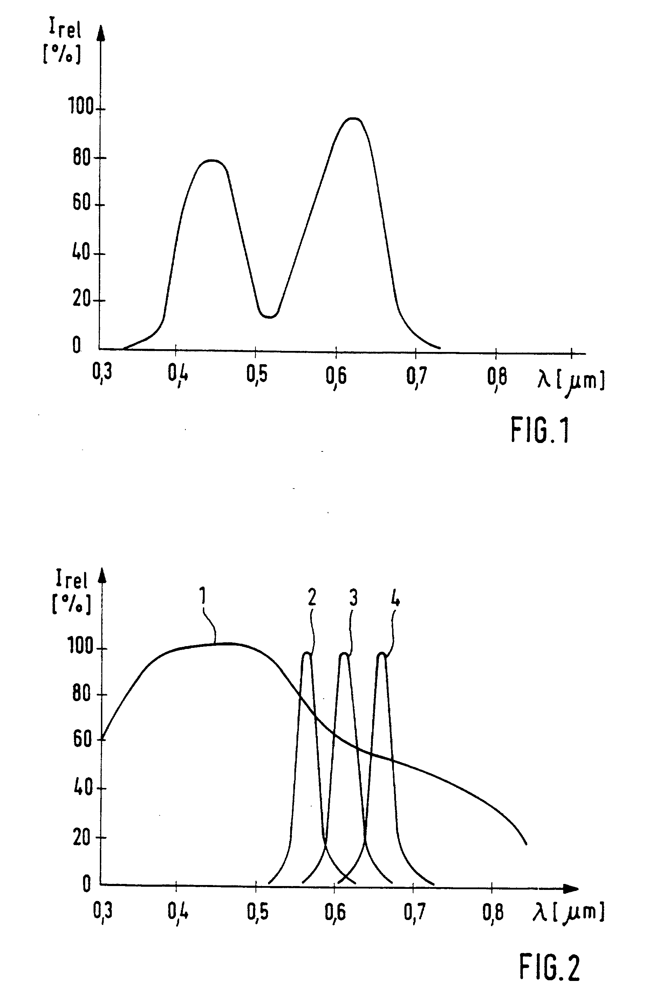

Fig. 1 zeigt das Anregungsspektrum eines erfindungsgemäßen chromhaltigen Wirtsgitters. Dieses Gitter absorbiert fast im gesamten sichtbaren Spektralbereich. Durch diese sehr breitbandige Absorption des Wirtsgitters werden die in diesem Bereich liegenden Linien der Seltenerdmetall-Dotierungen unterdrückt. Gleichzeitig findet ein Energieübertrag des Gitters auf die Seltenerdmetall-Dotierung statt, wodurch die Emission des Lumineszenzstoffes induziert wird.

Die breitbandige Absorption des Gitters hat darüber hinaus den Vorteil, dass für die Anregung der Lumineszenzstoffe starke Lichtquellen, wie beispielsweise Blitzlampen verwendet werden können, die ebenfalls im gesamten sichtbaren Spektralbereich Strahlung aussenden.

In Fig. 2 ist das Spektrum einer solchen Blitzlampe mit dem Bezugszeichen 1 dargestellt. Das Spektrum 1 der dargestellten Blitzlampe reicht kontinuierlich vom UV-Spektralbereich bis in den IR-Bereich hinein. In manchen Fällen kann es auch sinnvoll sein, den Lumineszenzstoff lediglich mit Licht aus dem sichtbaren Spektralbereich zu beleuchten. In diesem Fall bietet sich eine Beleuchtung mit Leuchtdioden entsprechender Wellenlänge an. Leuchtdioden weisen im Allgemeinen ein schmalbandiges Spektrum auf, so dass zur Abdeckung des gesamten sichtbaren Spektralbereichs mehrere Leuchtdioden notwendig sind. In Fig. 2 sind die Spektren 2, 3, 4 einer grünen, orangenen und roten Leuchtdiode gezeigt.

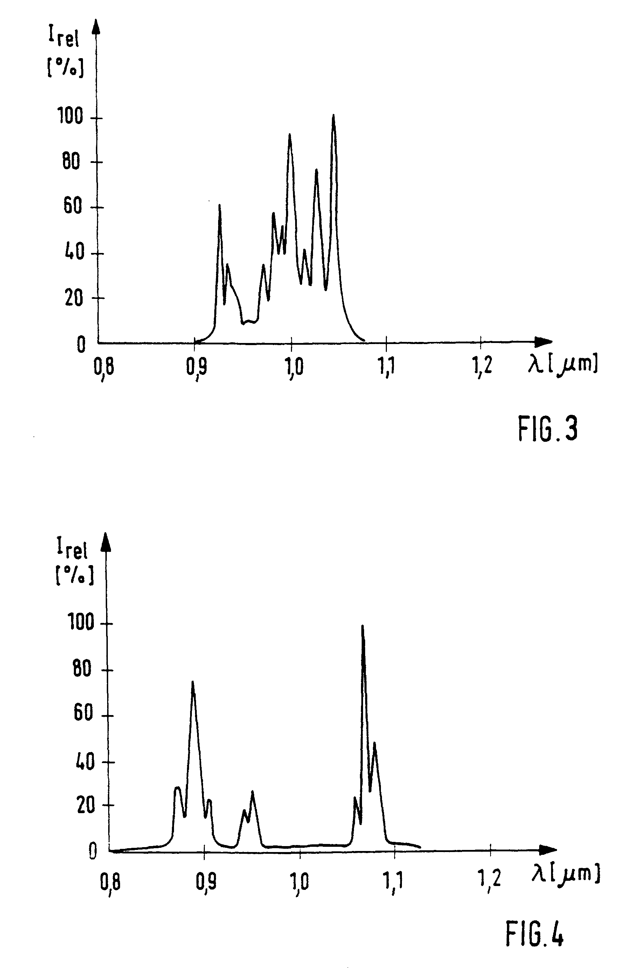

In Fig. 3, 4 und 5 sind die Emissionsspektren einzelner erfindungsgemäßer Lumineszenzstoffe dargestellt.

Fig. 3 zeigt das Emissionsspektrum eines Pr-dotierten Wirtsgitters. Das Spektrum reicht von ca. 0,9 µm bis ca. 1,08 µm. Es weist eine sehr charakteristische Zahl von Emissions-Peaks auf, die sehr gut als Echtheitsmerkmal ausgewertet werden können.

Fig. 4 zeigt das charakteristische Spektrum eines mit Nd-dotierten Gitters. Dieses Spektrum weist zwei relativ starke Emissions-Peaks im Bereich von ca. 0,9 µm und knapp unterhalb von 1,1 µm auf. Ein etwas kleinerer Peak befindet sich zudem im Bereich von 0,95 µm.

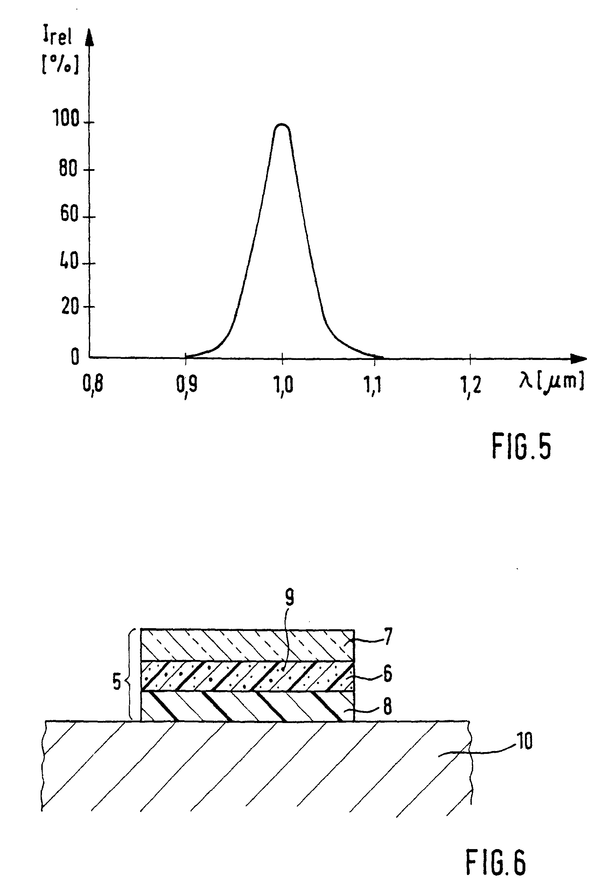

Das in Fig. 5 dargestellte Spektrum eines Yb-dotierten Gitters ist dagegen sehr symmetrisch und zeigt lediglich einen Peak, dessen Maximum bei 1,0 µm liegt.

All diesen erfindungsgemäßen Gittern ist gemeinsam, dass sie im nahen infraroten, d.h. im Bereich zwischen 0,8 µm und 1,1 µm eine sehr auffällige und schwer nachweisbare Lumineszenzemission zeigen. Obwohl alle drei Emissionsspektren im selben Spektralbereich angeordnet sind, unterscheiden sie sich so eindeutig voneinander, dass eine messtechnische Differenzierung gut möglich ist.

Um eine möglichst hohe Effektivität der Seltenerdmetalle zu gewährleisten, werden im Falle einer Granatstruktur Wirtsgitter mit der allgemeinen Formel

A₃Cr₅₋ₓAlₓO₁₂

verwendet, worin A für ein Element aus der Gruppe Scandium, Yttrium, Lanthanide und Actinide steht und der Index x die Bedingung 0 < x < 4,99 erfüllt. Vorzugsweise bewegt sich der Index x im Bereich von 0,3 und 2,5.

Eine bevorzugte Ausführungsform des erfindungsgemäßen Lumineszenzstoffes lautet

Y_{3-z}D_{z}Cr₅₋ₓAlₓO₁₂,

worin D für Neodym, Praseodym oder Ytterbium steht und der Index z die Bedingung 0 < z < 1 erfüllt.

Liegt das Wirtsgitter in einer Perovskitstruktur vor, so lässt sich diese durch die allgemeine Formel

ACrO₃

beschreiben, worin A für ein Element aus der Gruppe Yttrium, Scandium und den Lanthaniden steht.

Eine bevorzugte Ausführungsform des erfindungsgemäßen Lumineszenzstoffes in einer Perovskitstruktur lässt sich durch folgende Formel

Y_{1-z}D_{z}CrO₃

beschreiben, worin D für eines der Elemente Neodym, Praseodym oder Ytterbium steht und der Index z die Bedingung 0 < z < 1 erfüllt.

Im Folgenden werden einige Beispiele der erfindungsgemäßen Lumineszenzstoffe näher erläutert.

### Beispiel 1:

Herstellung von neodymaktiviertem Yttrium-Aluminium-Chrom-Mischgranat (Y_{2,95}Nd_{0,05}Cr₄Al₁O₁₂):

47,82 Yttriumoxid (Y₂O₃), 7,32 g Aluminiumoxid (Al₂O₃), 43,65 g Chrom(III)oxid (Cr₂O₃), 1,21 g Neodymoxid (Nd₂O₃) und 100 g entwässertes Natriumsulfat (Na₂SO₄) werden innig vermischt und im Korundtiegel 12 Stunden auf 1100 °C erhitzt.

Nach dem Abkühlen wird das Reaktionsprodukt zerkleinert, mit Wasser das Flussmittel herausgewaschen, als Nebenprodukt entstandenes Natriumchromat mit Schwefelsäure/Eisen(II)sulfat zu Chrom(III)sulfat reduziert und bei 100 °C an Luft getrocknet. Zur Erzielung einer möglichst hohen Kornfeinheit wird das Pulver anschließend in einer Rührwerkskugelmühle in Wasser vermahlen bis eine mittlere Korngröße von kleiner als 1 µm vorliegt.

Nach dem Filtrieren und Trocknen erhält man ein grünes Pulver.

### Beispiel 2:

Herstellung von ytterbiumaktiviertem Yttrium-Aluminium-Chrom-Mischgranat (Y_{2,7}Yb_{0,3}Cr₃Al₂O₁₂):

43,93 g Yttriumoxid (Y₂O₃), 14,69 g Aluminiumoxid (Al₂O₃), 32,86 g Chrom(III)oxid (Cr₂O₃), 8,52 g Ytterbiumoxid (Yb₂O₃) und 100 g entwässertes Natriumsulfat (Na₂SO₄) werden innig vermischt und im Korundtiegel 12 Stunden auf 1100 °C erhitzt.

Nach dem Abkühlen wird das Reaktionsprodukt zerkleinert, mit Wasser das Flussmittel herausgewaschen, als Nebenprodukt entstandenes Natriumchromat mit Schwefelsäure/Eisen(II)sulfat zu Chrom(III)sulfat reduziert und bei 100 °C an Luft getrocknet. Zur Erzielung einer möglichst hohen Kornfeinheit wird das Pulver anschließend in einer Rührwerkskugelmühle in Wasser entsprechend vermahlen.

Nach dem Filtrieren und Trocknen erhält man ein grünes Pulver mit einer mittleren Korngröße von kleiner als 1 µm.

### Beispiel 3:

Herstellung von praseodymaktiviertem Yttrium-Aluminium-Chrom-Mischgranat (Y_{2,98}Pr_{0,02}Cr_{2,4}Al_{2,6}O₁₂):

51,39 g Yttriumoxid (Y₂O₃), 20,24 g Aluminiumoxid (Al₂O₃), 27,86 g Chrom(III)oxid (Cr₂O₃), 0,5 g Praseodymoxid (Pr₂O₃) und 100 g entwässertes Natriumsulfat (Na₂SO₄) werden innig vermischt und im Korundtiegel 12 Stunden auf 1100 °C erhitzt.

Nach dem Abkühlen wird das Reaktionsprodukt zerkleinert, mit Wasser das Flussmittel herausgewaschen, als Nebenprodukt entstandenes Natriumchromat mit Schwefelsäure/Eisen(II)sulfat zu Chrom(III)sulfat reduziert und bei 100 °C an Luft getrocknet. Zur Erzielung einer möglichst hohen Kornfeinheit wird das Pulver anschließend in einer Rührwerkskugelmühle in Wasser entsprechend vermahlen.

Nach dem Filtrieren und Trocknen erhält man ein hellgrünes Pulver mit einer mittleren Korngröße von kleiner als 1 µm.

### Beispiel 4:

Herstellung von neodymaktiviertem Yttrium-Chrom-Perovskit (Y_{0,95}Nd_{0,05}CrO₃):

55,96 g Yttriumoxid (Y₂O₃), 39,65 g Chromoxid (Cr₂O₃), 4,39 g Neodymoxid (Nd₂O₃) und 100 g entwässertes Natriumsulfat (Na₂SO₄) werden innig vermischt und im Korundtiegel 20 Stunden auf 1100 °C erhitzt.

Nach dem Abkühlen wird das Reaktionsprodukt zerkleinert, mit Wasser das Flussmittel herausgewaschen, als Nebenprodukt entstandenes Natriumchromat mit Schwefelsäure/Eisen(II)sulfat zu Chrom(III)sulfat reduziert und bei 100 °C an Luft getrocknet. Zur Erzielung einer möglichst hohen Kornfeinheit wird das Pulver anschließend in einer Rührwerkskugelmühle in Wasser entsprechend vermahlen.

Nach dem Filtrieren und Trocknen erhält man ein hellgrünes Pulver mit einer mittleren Korngröße von kleiner als 1 µm.

Die lumineszierenden Substanzen können gemäß der Erfindung auf verschiedenste Art und Weise in das Wertdokument eingebracht werden. So können die lumineszierenden Substanzen beispielsweise einer Druckfarbe zugemischt werden, die zusätzlich visuell sichtbare Farbzusätze enthält. Aber auch ein Zumischen der lumineszierenden Substanz zu einer Papiermasse ist möglich. Ebenso können die lumineszierenden Substanzen auf oder in einem Kunststoffträgermaterial vorgesehen werden, welches beispielsweise zumindest teilweise in eine Papiermasse eingebettet wird. Das Trägermaterial kann hierbei die Form eines Sicherheitsfadens, einer Melierfaser oder einer Planchette haben.

Das Kunststoff- oder Papierträgermaterial kann jedoch auch an jedem beliebigen anderen Gegenstand, z.B. im Rahmen von Produktsicherungsmaßnahmen befestigt werden. Das Trägermaterial ist in diesem Fall vorzugsweise in Form eines Etiketts ausgebildet. Wenn das Trägermaterial Bestandteil des zu sichernden Gegenstandes ist, wie es z.B. bei Aufreißfäden der Fall ist, ist selbstverständlich auch jede andere Formgebung möglich. In bestimmten Anwendungsfällen kann es sinnvoll sein, die lumineszierende Substanz als unsichtbare Beschichtung auf dem Wertdokument vorzusehen. Sie kann dabei vollflächig oder aber auch in Form von bestimmten Mustern, wie z.B. Streifen, Linien, Kreisen oder auch in Form von alphanummerischen Zeichen vorliegen.

Unter der Bezeichnung "Wertdokument" sind im Rahmen der Erfindung Banknoten, Schecks, Aktien, Wertmarken, Ausweise, Kreditkarten, Pässe und auch andere Dokumente sowie Etiketten, Siegel, Verpackungen oder andere Elemente für die Produktsicherung zu verstehen.

Fig. 6 zeigt eine Ausführungsform eines erfindungsgemäßen Sicherheitselements. Das Sicherheitselement besteht in diesem Fall aus einem Etikett 5, das sich aus einer Papier- oder Kunststoffschicht 6, einer transparenten Abdeckschicht 7 sowie einer Klebstoffschicht 8 zusammensetzt. Dieses Etikett 5 ist über die Kleberschicht 8 mit einem beliebigen Substrat 10 verbunden. Bei diesem Substrat 10 kann es sich um Wertdokumente, Ausweise, Pässe, Urkunden oder dergleichen aber auch um andere zu sichernde Gegenstände, wie beispielsweise CDs, Verpackungen o. ä. handeln.

Der Lumineszenzstoff 9 ist in diesem Ausführungsbeispiel im Volumen der Schicht 6 enthalten. Handelt es sich bei der Schicht 6 um eine Papierschicht, so beträgt die Konzentration an Lumineszenzstoff zwischen 0,05 und 1 Gew.%.

Alternativ könnte der Lumineszenzstoff auch in einer nicht gezeigten Druckfarbe enthalten sein, die auf eine der Etikettenschichten, vorzugsweise auf die Oberfläche der Schicht 6 aufgedruckt wird. Die Konzentration an Lumineszenzstoff in der Druckfarbe bewegt sich in diesem Fall im Bereich von 10 bis 30 Gew.%.

Statt den Lumineszenzstoff in oder auf einem Trägermaterial vorzusehen, das anschließend als Sicherheitselement auf einem Gegenstand befestigt wird, ist es gemäß der Erfinding auch möglich, die lumineszierende Substanz direkt in das zu sichernde Wertdokument bzw. auf dessen Oberfläche in Form einer Beschichtung vorzusehen.

## Patentansprüche

1. Bedrucktes Wertdokument mit zumindest einem Echtheitsmerkmal in Form einer lumineszierenden Substanz auf der Basis von mit wenigstens einem Seltenerdmetall dotierten Wirtsgitter, das im Wesentlichen im gesamten sichtbaren Spektralbereich absorbiert, in wesentlichen Teilen des sichtbaren Spektralbereichs anregbar und zumindest im Wellenlängenbereich zwischen 0,8 µm und 1,1 µm wenigstens teilweise transparent ist, wobei das Seltenerdmetall im Wellenlängenbereich zwischen 0,8 µm und 1,1 µm emittiert, und dass das Wirtsgitter eine Granat- oder Perovskitstruktur aufweist.

2. Bedrucktes Wertdokument nach Anspruch 1, **dadurch gekennzeichnet, dass** das Seltenerdmetall Ytterbium, Praseodym oder Neodym ist.

3. Bedrucktes Wertdokument nach Anspruch 1 oder 2, **dadurch gekennzeichnet, dass** das Wirtsgitter als absorbierenden Bestandteil Chrom aufweist.

4. Bedrucktes Wertdokument nach wenigstens einem der Ansprüche 1 bis 3, **dadurch gekennzeichnet, dass** sich die Granatstruktur durch die allgemeine Formel
A₃Cr₅₋ₓAlₓO₁₂
beschreiben lässt, worin
A für ein Element aus der Gruppe Scandium, Yttrium, Lanthanide, Actinide steht und der Index x die Bedingung 0 < x < 4,99 erfüllt.

5. Bedrucktes Wertdokument nach Anspruch 4, **dadurch gekennzeichnet, dass** der Index x die Bedingung 0,3 < x < 2,5 erfüllt.

6. Bedrucktes Wertdokument nach Anspruch 4 oder 5, **dadurch gekennzeichnet, dass** sich die lumineszierende Substanz durch die Formel
Y_{3-z}D_{z}Cr₅₋ₓAlₓO₁₂
beschreiben lässt, worin
D für ein Element aus der Gruppe Neodym, Praseodym oder Ytterbium steht und der Index z die Bedingung 0 < z < 1 erfüllt.

7. Bedrucktes Wertdokument nach wenigstens einem der Ansprüche 1 bis 3, **dadurch gekennzeichnet, dass** sich die Perovskitstruktur durch die allgemeine Formel
ACrO₃ beschreiben lässt, worin
A für ein Element aus der Gruppe Yttrium, Scandium oder der Lanthanide steht.

8. Bedrucktes Wertdokument nach Anspruch 7, **dadurch gekennzeichnet, dass** sich die lumineszierende Substanz durch die Formel
Y_{1-z}D_{z}CrO₃
beschreiben lässt, worin
D für ein Element aus der Gruppe Neodym, Praseodym oder Ytterbium steht und der Index z die Bedingung 0 < z < 1 erfüllt.

9. Bedrucktes Wertdokument nach wenigstens einem der Ansprüche 1 bis 8, **dadurch gekennzeichnet, dass** die lumineszierende Substanz einer Druckfarbe zugemischt ist, die zusätzlich visuell sichtbare Farbzusätze enthält.

10. Bedrucktes Wertdokument nach wenigstens einem der Ansprüche 1 bis 8, **dadurch gekennzeichnet, dass** die lumineszierende Substanz der Papiermasse zugemischt ist.

11. Bedrucktes Wertdokument nach wenigstens einem der Ansprüche 1 bis 8, **dadurch gekennzeichnet, dass** die lumineszierende Substanz auf oder in einem Trägermaterial vorgesehen ist, welches zumindest teilweise in die Papiermasse eingebettet ist.

12. Bedrucktes Wertdokument nach Anspruch 11, **dadurch gekennzeichnet, dass** das Trägermaterial aus Kunststoff besteht.

13. Bedrucktes Wertdokument nach Anspruch 11 oder 12, **dadurch gekennzeichnet, dass** das Trägermaterial als Sicherheitsfaden oder Melierfaser ausgebildet ist.

14. Bedrucktes Wertdokument nach wenigstens einem der Ansprüche 1 bis 8, **dadurch gekennzeichnet, dass** die lumineszierende Substanz als unsichtbare, zumindest teilweise Beschichtung auf dem Wertdokument vorgesehen ist.

15. Bedrucktes Wertdokument nach Anspruch 14, **dadurch gekennzeichnet, dass** die Beschichtung die Form eines Streifens aufweist.

16. Sicherheitselement, welches zumindest ein Trägermaterial und eine lumineszierende Substanz auf der Basis von mit wenigstens einem Seltenerdmetall dotierten Wirtsgitter aufweist, das im Wesentlichen im sichtbaren Spektralbereich absorbiert, in wesentlichen Teilen des sichtbaren Spektralbereichs anregbar und zumindest im Wellenlängenbereich zwischen 0,8 µm und 1,1 µm wenigstens teilweise transparent ist, wobei das Seltenerdmetall im Wellenlängenbereich zwischen 0,8 µm und 1,1 µm emittiert, und das Wirtsgitter eine Granat- oder Perovskitstruktur aufweist.

17. Sicherheitselement nach Anspruch 16, **dadurch gekennzeichnet, dass** die lumineszierende Substanz in dem Volumen des Trägermaterials vorgesehen ist.

18. Sicherheitselement nach Anspruch 17, **dadurch gekennzeichnet, dass** die lumineszierende Substanz im Trägermaterial in einer Konzentration von 0,01 bis 10 Gew. %, vorzugsweise von 0,1 bis 5 Gew.% vorliegt.

19. Sicherheitselement nach Anspruch 16, **dadurch gekennzeichnet, dass** die lumineszierende Substanz in einer auf das Trägermaterial aufgebrachten Schicht vorliegt.

20. Sicherheitselement nach Anspruch 19, **dadurch gekennzeichnet, dass** die lumineszierende Substanz in einer Druckfarbe in einer Konzentration von 0,5 bis 40 Gew. %, vorzugsweise von 20 bis 30 Gew.% vorliegt.

21. Sicherheitselement nach wenigstens einem der Ansprüche 16 bis 20, **dadurch gekennzeichnet, dass** das Trägermaterial aus Kunststoff besteht.

22. Sicherheitselement nach wenigstens einem der Ansprüche 16 bis 20, **dadurch gekennzeichnet, dass** das Trägermaterial aus Papier besteht.

23. Sicherheitselement nach wenigstens einem der Ansprüche 16 bis 22, **dadurch gekennzeichnet, dass** das Trägermaterial als Sicherheitsfaden, Melierfaser, Planchette oder Etikett ausgebildet ist.

## Claims

1. A printed value document having at least one authenticity feature in the form of a luminescent substance based on a host lattice doped with at least one rare earth metal, which absorbs substantially in the entire visible spectral region, is excitable in substantial parts of the visible spectral region, and is at least partly transparent at least in the wavelength range between 0.8 µm and 1.1 µm, whereby the rare earth metal emits in the wavelength range between 0.8 µm and 1.1 µm, and the host lattice has a garnet or perovskite structure.

2. A printed value document according to claim 1, **characterized in that** the rare earth metal is ytterbium, praseodymium or neodymium.

3. A printed value document according to claim 1 or 2, **characterized in that** the host lattice contains chromium as an absorptive component.

4. A printed value document according to at least one of claims 1 to 3, **characterized in that** the garnet structure can be described by the general formula
A₃Cr₅₋ₓAlₓO₁₂
where A stands for an element selected from the group consisting of scandium, yttrium, the lanthanides, the actinides, and the index x fulfils the condition 0<x<4.99.

5. A printed value document according to claim 4, **characterized in that** the index x fulfils the condition 0.3<x<2.5.

6. A printed value document according to claim 4 or 5, **characterized in that** the luminescent substance can be described by the formula
Y_{3-z}D_{z}Cr₅₋ₓAlₓO₁₂
where D stands for an element selected from the group consisting of neodymium, praseodymium or ytterbium, and the index z fulfils the condition 0<z<1.

7. A printed value document according to at least one of claims 1 to 3, **characterized in that** the perovskite structure can be described by the general formula
ACrO₃
where A stands for an element selected from the group consisting of yttrium, scandium or the lanthanides.

8. A printed value document according to claim 7, **characterized in that** the luminescent substance can be described by the formula
Y_{1-z}D_{z}CrO₃
where D stands for an element selected from the group consisting of neodymium, praseodymium or ytterbium, and the index z fulfils the condition 0<z<1.

9. A printed value document according to at least one of claims 1 to 8, **characterized in that** the luminescent substance is admixed to a printing ink which additionally contains visually visible color additives.

10. A printed value document according to at least one of claims 1 to 8, **characterized in that** the luminescent substance is admixed to the paper pulp.

11. A printed value document according to at least one of claims 1 to 8, **characterized in that** the luminescent substance is provided on or in a supporting material which is at least partly embedded in the paper pulp.

12. A printed value document according to claim 11, **characterized in that** the supporting material consists of plastic.

13. A printed value document according to claim 11 or 12, **characterized in that** the supporting material is formed as a security thread or mottling fiber.

14. A printed value document according to at least one of claims 1 to 8, **characterized in that** the luminescent substance is provided as an invisible, at least partial coating on the value document.

15. A printed value document according to claim 14, **characterized in that** the coating has the form of a stripe.

16. A security element having at least one supporting material and one luminescent substance based on a host lattice doped with at least one rare earth metal, which absorbs substantially in the visible spectral region, is excitable in substantial parts of the visible spectral region, and is at least partly transparent at least in the wavelength range between 0.8 µm and 1.1 µm, whereby the rare earth metal emits in the wavelength range between 0.8 µm and 1.1 µm, and the host lattice has a garnet or perovskite structure.

17. A security element according to claim 16, **characterized in that** the luminescent substance is provided within the volume of the supporting material.

18. A security element according to claim 17, **characterized in that** the luminescent substance is present in the supporting material in a concentration between 0.01 and 10% by weight, preferably between 0.1 and 5% by weight.

19. A security element according to claim 16, **characterized in that** the luminescent substance is present in a layer applied to the supporting material.

20. A security element according to claim 19, **characterized in that** the luminescent substance is present in a printing ink in a concentration between 0.5 and 40% by weight, preferably between 20 and 30% by weight.

21. A security element according to at least one of claims 16 to 20, **characterized in that** the supporting material consists of plastic.

22. A security element according to at least one of claims 16 to 20, **characterized in that** the supporting material consists of paper.

23. A security element according to at least one of claims 16 to 22, **characterized in that** the supporting material is formed as a security thread, mottling fiber, planchet or label.

## Revendications

1. Document de valeur imprimé comprenant au moins un caractère d'authenticité sous la forme d'une substance luminescente à base de grille hôte dotée d'au moins un métal de terres rares, lequel document de valeur absorbe essentiellement dans tout le domaine spectral visible, est excitable dans des parties essentiellement du domaine spectral visible et est au moins partiellement transparent au moins dans le domaine des longueurs d'ondes comprises entre 0,8 µm et 1,1 µm, dans lequel le métal de terres rares émet dans le domaine des longueurs d'ondes comprises entre 0,8 µm et 1,1 µm et la grille hôte présente une structure de type grenat ou pérovskite.

2. Document de valeur imprimé, selon la revendication 1, **caractérisé en ce que**
le métal de terres rares est l'ytterbium, le praséodyme ou le néodyme.

3. Document de valeur imprimé selon la revendication 1 ou 2, **caractérisé en ce que**
la grille hôte présente du chrome servant de composant absorbant.

4. Document de valeur imprimé, selon au moins l'une quelconque des revendications 1 à 3, **caractérisé en ce que**
la structure de type grenat peut être représentée par la formule générale
A₃Cr₅₋ₓAlₓO₁₂
dans laquelle
A représente un élément du groupe scandium, yttrium, lanthanide, actinide et l'indice x satisfait à la condition 0 < x < 4,99.

5. Document de valeur imprimé, selon la revendication 4, **caractérisé en ce que**
l'indice x satisfait à la condition 0,3 < x < 2,5.

6. Document de valeur imprimé, selon la revendication 4 ou 5, **caractérisé en ce que**
la substance luminescente peut être représentée par la formule
Y_{3-z}D_{z}Cr₅₋ₓAlₓO₁₂
dans laquelle
D représente un élément du groupe néodyme, praséodyme ou ytterbium et l'indice z satisfait à la condition 0 < z < 1.

7. Document de valeur imprimé, selon au moins l'une quelconque des revendications 1 à 3, **caractérisé en ce que**
la structure pérovskite peut être représentée par la formule générale
ACrO₃
dans laquelle
A représente un élément du groupe yttrium, scandium ou du groupe des lanthanides.

8. Document de valeur imprimé, selon la revendication 7, **caractérisé en ce que**
la substance luminescente peut être représentée par la formule
Y_{1-z}D_{z}CrO₃
dans laquelle
D représente un élément du groupe néodyme, praséodyme ou ytterbium et l'indice z satisfait à la condition 0 < z < 1.

9. Document de valeur imprimé, selon au moins l'une quelconque des revendications 1 à 8, **caractérisé en ce que**
la substance luminescente est mélangée à une encre d'impression qui contient en outre des colorants visibles dans le champ visuel.

10. Document de valeur imprimé, selon au moins l'une quelconque des revendications 1 à 8, **caractérisé en ce que**
la substance luminescente est mélangée à la masse de papier.

11. Document de valeur imprimé, selon au moins l'une quelconque des revendications 1 à 8, **caractérisé en ce que**
la substance luminescente est prévue sur ou dans un matériau porteur qui est incorporé au moins partiellement dans la masse de papier.

12. Document de valeur imprimé selon la revendication 11, **caractérisé en ce que**
le matériau porteur est composé de matière plastique.

13. Document de valeur imprimé, selon la revendication 11 ou 12, **caractérisé en ce que**
le matériau porteur est configuré sous forme de fils de sécurité ou de fibres mêlées.

14. Document de valeur imprimé, selon au moins l'une quelconque des revendications 1 à 8, **caractérisé en ce que**
la substance luminescente est prévue sur le document de valeur sous la forme d'un revêtement invisible au moins partiellement.

15. Document de valeur imprimé selon la revendication 14, **caractérisé en ce que**
le revêtement a la forme d'une bande.

16. Élément de sécurité, qui présente au moins un matériau porteur et une substance luminescente à base de grille hôte dotée d'au moins un métal de terres rares, qui absorbe essentiellement dans le domaine spectral visible, est excitable dans des parties essentiellement du domaine spectral visible et est au moins partiellement transparent au moins dans le domaine des longueurs d'ondes comprises entre 0,8 µm et 1,1 µm, dans lequel le métal de terres rares émet dans le domaine des longueurs d'ondes comprises entre 0,8 µm et 1,1 µm et la grille hôte présente une structure de type grenat ou pérovskite.

17. Élément de sécurité selon la revendication 16, **caractérisé en ce que**
la substance luminescente est prévue dans le volume du matériau porteur.

18. Élément de sécurité selon la revendication 17, **caractérisé en ce que**
la substance luminescente est présente dans le matériau porteur à une concentration de 0,01 à 10 % en poids, de préférence de 0,1 à 5 % en poids.

19. Élément de sécurité selon la revendication 16, **caractérisé en ce que**
la substance luminescente est présente dans une couche déposée sur le matériau porteur.

20. Élément de sécurité selon la revendication 19, **caractérisé en ce que**
la substance luminescente est présente dans une encre d'impression à une concentration de 0,5 à 40 % en poids, de préférence de 20 à 30 % en poids.

21. Élément de sécurité selon au moins l'une quelconque des revendications 16 à 20, **caractérisé en ce que**
le matériau porteur est composé de matière plastique.

22. Élément de sécurité selon au moins l'une quelconque des revendications 16 à 20, **caractérisé en ce que**
le matériau porteur est composé de papier.

23. Élément de sécurité selon au moins l'une quelconque des revendications 16 à 22, **caractérisé en ce que**
le matériau porteur est configuré sous la forme de fils de sécurité, de fibres mêlées, d'une planchette ou d'une étiquette.
